# EUROPEAN PATENT SPECIFICATION

(11) **EP 3 465 372 B1**
(45) Date of publication and mention of the grant of the patent: **28.10.2026**
(21) Application number: 17807389.6
(22) Date of filing: 31.05.2017
(51) Int. Cl.: G05D 7/00, F04D 15/00

(54) **PUMP CONTROL DESIGN TOOLBOX TECHNIQUE FOR VARIABLE SPEED PUMPING APPLICATIONS**
TOOLBOX-TECHNIK ZUR PUMPENSTEUERUNGSKONSTRUKTION FÜR DREHZAHLVARIABLE PUMPANWENDUNGEN
TECHNIQUE DE BOÎTE À OUTILS DE CONCEPTION DE RÉGULATION DE POMPE DESTINÉE À DES APPLICATIONS DE POMPAGE À VITESSE VARIABLE

(30) Priority: 31.05.2016 US 201662343352 P
(43) Date of publication of application: 10.04.2019
(73) Proprietor: Fluid Handling LLC., Morton Grove, IL 60053 (US)
(72) Inventor: CHENG, Andrew A., Wilmette, IL 60091 (US); SCHOENHEIT, Kyle D., Waterloo, NY 13165 (US)
(74) Representative: Wörz, Volker Alfred
(86) International application number: PCT/US2017/035192
(87) International publication number: WO 2017/210283

(56) References cited:
- EP-A1- 3 443 228
- US-A1- 2005 123 408
- US-A1- 2010 189 572
- US-A1- 2012 173 027
- US-A1- 2014 039 836
- US-A1- 2014 316 591
- US-A1- 2015 016 948
- US-B2- 8 041 462

## Description

### CROSS REFERENCE TO RELATED APPLICATION

This application claims benefit to U.S. provisional application no. 62/343,352, filed 31 May 2016.

The present invention builds on the family of technologies disclosed in the other related applications identified below.

### BACKGROUND OF THE INVENTION

### 1. Field of the Invention

The present invention relates to a technique for controlling a pumping system and pumping related applications in such a pumping system. In particular, an apparatus and a method for providing variable speed pump control in a hydronic pump system are described.

### 2. Brief Description of Related Art

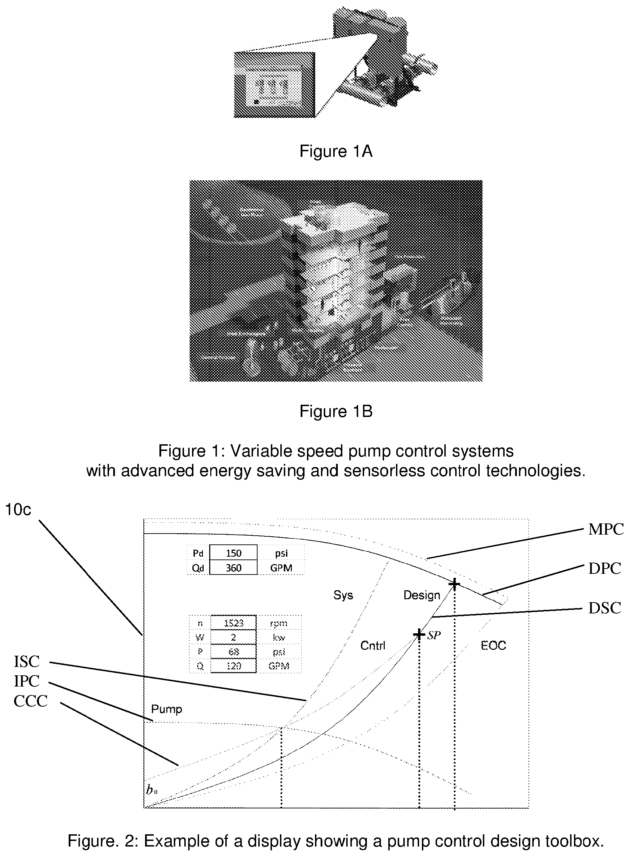

Reference nos. [1-9] set forth below disclose various variable speed pump controls with advanced energy saving and sensorless control technologies for heating and cooling close loop hydronic applications, pressure booster, industrial and agriculture applications, e.g., see Fig. 1, which are all assigned to the assignee of the present application. With all new technologies introduced, some traditionally unknowns pump system operation parameters or characteristics curves, such as vary system characteristics curve, adaptive control set point, pressure or flow rate (without sensors), and so forth, become known and may be presentable up to engineers and operators for better understanding the pump_system_control operation status in real time.

By way of further example, reference no. [10] below discloses a real time graphic sensorless energy saving pump controller, e.g., which includes mainly a real time graphic pump-system-control operation display and monitoring module, based upon pump characteristics data selected from a pump data base as well as run time operation variables provided from an energy saving control module and a sensorless converter module integrated with, which is also assigned to the assignee of the present application. With a graphic touch screen in terms of real time graphic and numerical display, one can not only observe the pump and system characteristic information such as the intersection of pump, system and control curves in a real time manner inside of the pump operation region charted with maximum pump curve and end of curve, but one can also observe corresponding control values such as instant flow rate and pressure, adaptive set point value, and so on so forth, under which pump is operated at the time as well.

US 2014/ 316 591 A1 discloses a water supply apparatus having a controller that determines whether the operation of the pump should be shifted from a first operation mode to a second operation mode with less power consumption than the first operation mode based upon a pump stopping time.

### SUMMARY OF THE INVENTION

In summary, the present invention provides a new pump control design toolbox for variable speed pump controls, with which a desired pump control curve may be obtained throughout a design pump characteristics curve reconfigured interactively and in real time based upon system characteristics on site, to meet the flow and pressure requirement in the system. The pump control design toolbox makes pump control setup procedures reformulated significantly, with the pump control operation set up and maintenance much easier, and for any unknown hydronic systems applications to achieve the best pumping operation efficiency to save energy. In addition, the toolbox pump control design may include a hydronic system recognition module integrated with system and flow adaptive control so that an automatic pump control setup function may be realized to setup and run on a hydronic system automatically with the minimized pumping energy consumption. In particular, the present invention suggests an apparatus for providing variable speed pump control in a hydronic pump system comprising the features of claim 1, and a respective method comprising the features of claim 10.

### Specific Embodiments

By way of example, the present invention provides a new and unique technique for providing variable speed pump control in a hydronic pump system having a system flow and pressure requirement.

The present invention includes, or takes the form of an apparatus, featuring a signal processor or processing module according to claim 1 and configured to:
receive signaling containing information about an instant system characteristic curve displayed on a display for viewing by a pump operator of the hydronic pump system, an instant pump characteristic curve displayed on a display for viewing by a pump operator of the hydronic pump system, a system flow and pressure requirement displayed on the display for viewing by the pump operator of the hydronic pump system, and real time changes by the pump operator to at least one control parameter to adjust the performance of the hydronic pump system; and
determine corresponding signaling containing information about a design/redesign of a pump curve, a system curve and a control curve to adjust the performance of the hydronic pump system to correspond with the system flow and pressure requirement of the hydronic system, based upon the signaling received.

According to some embodiments, the present invention may include one or more of the following features:
The apparatus may include, or form part of, a pump control design toolbox configured with a combination of the signal processor or processing module and the display for providing display functionality related to the pump control design toolbox.

The signal processor or processing module may be configured to provide the corresponding signaling as display control signaling; and the apparatus may include a display that responds to the display control signaling and provides display signaling containing information about:
at least one of the system characteristic curve and the system flow and pressure requirement for the hydronic pump system; and
a pump control design toolbox set up screen having the at least one control parameter to adjust the performance of the hydronic pump system.

The display may include a touchscreen display for the pump operator to touch in order to make the real time changes by the pump operator to the at least one control parameter to adjust the performance of the hydronic pump system.

The at least one control parameter may include a "set point" parameter and a control "curve shape" parameter; and the real time changes by the pump operator may include an adjustment to either the "set point" parameter, or the control "curve shape" parameter, or both the "set point" parameter and the control "curve shape" parameter.

The display may respond to the display control signaling and provide the at least one pump, system or control curve, including an instant pump curve, an instant system curve and a control curve.

The display control signaling may contain information about a designed system curve and a designed pump curve; and the display provides the designed system curve and designed pump curve in real time for viewing by the pump operator.

The display may respond to the display control signaling and provide one or more of the following:
pump pressure in Pascal [1 Pa = 145, 038·10⁻⁶ psi],
pump flow in litres per second [1 I/s = 15,85 gpm],
pump power in kW and
pump motor speed n in rpm.

The display may respond to the display control signaling and provide a pump control design toolbox set up screen that includes one or more drop down menus to enter or select setup data by the pump operator, including the at least one control points for defining designed pump, system and control curves.

The real time changes by a pump operator may include, or take the form of, pump operator inputs to parameters displayed in fields, boxes, etc. on the display screen, e.g., via one or more keyboard inputs, as well pump operator touchscreen inputs to parameters, curves, virtual buttons, icons, or requirements displayed on the display screen, e.g., via one or more finger or stylus inputs.

The display screen may also include one or more control commend icons for the pump operator to touch by hand and/or actuate with the click of a mouse in order to implement the design/redesign of the at least one pump, system or control curve to adjust the performance of the hydronic pump system to correspond with the system flow and pressure requirement of the hydronic system. By way of example, the one or more control commend icons for the pump operator may include a commend icon so that an automatic pump control setup function may be realized to setup and run on a hydronic system automatically with the minimized pumping energy consumption. The signal processor or signal processing module may be configured to provide the corresponding signaling as control signaling to implement the design/redesign of the at least one pump, system or control curve to adjust the performance of the hydronic pump system to correspond with the system flow and pressure requirement of the hydronic system, e.g., consistent with the one or more control command icons touched or actuated by the pump operator.

By way of example, the signal processor or processing module may include, or take the form of, at least one signal processor and at least one memory including computer program code, and the at least one memory and computer program code are configured to, with at least one signal processor, to cause the signal processor at least to receive the signaling (or, for example, the further signaling) and determine the corresponding signaling, based upon the signaling received. The signal processor or processing module may be configured with suitable computer program code in order to implement suitable signal processing algorithms and/or functionality, consistent with that set forth herein.

The present invention may take the form of a method according to claim 10 and featuring:
receiving in a signal processor or signal processing module signaling containing information about an instant system characteristic curve displayed on a display for viewing by a pump operator of the hydronic pump system, an instant pump characteristic curve displayed on a display for viewing by a pump operator of the hydronic pump system, a system flow and pressure requirement displayed on the display for viewing by the pump operator of the hydronic pump system, and real time changes by the pump operator to at least one control parameter to adjust the performance of the hydronic pump system; and
determining in the signal processor or signal processing module corresponding signaling containing information about a design/redesign of a pump curve, system curve and control curve to adjust the performance of the hydronic pump system to correspond with the system flow and pressure requirement of the hydronic system, based upon the signaling received.

The method may also include one or more of the features set forth herein, including providing from the signal processor or processing module the corresponding signaling as control signaling to control a pump in a pumping system, e.g., including in such a pumping system.

The present invention provides a new technique that is a further development of, and builds upon, the aforementioned family of technologies set forth herein.

### BRIEF DESCRIPTION OF THE DRAWING

The drawing includes the following Figures, which are not necessarily drawn to scale:
Figure 1 includes Fig. 1A and 1B showing examples of variable speed pump control systems with advanced energy saving and sensorless control technologies, e.g., in which the present invention may be implemented.
Figure 2 shows an example of a display showing a pump control design toolbox implementation, according to some embodiments of the present invention.
Figure 3 shows an example of a display showing a pump control design toolbox set up screen implementation, according to some embodiments of the present invention.
Figure 4 shows an example of a touchscreen pumping control system with a pump control design toolbox, according to some embodiments of the present invention.
Figure 5 shows an example of a display of a setup for a constant dynamic fraction loss system, according to some embodiments of the present invention.
Figure 6 shows an example of a display of a setup with a limited dynamic fraction loss variation region, according to some embodiments of the present invention.
Figure 7 shows an example of a display of a setup with a varying system within a full pump operation hydronic domain, according to some embodiments of the present invention.
Figure 8 is a block diagram of apparatus for implementing a pump control design toolbox, e.g., having a signal processor or processing module, according to some embodiments of the present invention.

### DETAILED DESCRIPTION OF THE INVENTION

### 1. Summary

According to the present invention, a pump control design toolbox modulated as a key part of a variable speed pump control with the new concept on pump control set up procedures to meet the flow and pressure requirement in the system is set forth herein. With its interactive, real time and on site features in nature, the pump control design toolbox makes the pump control setup procedures reformulated significantly, with which the pump control may be designed or redesigned throughout reconfiguring a desired pump characteristics curve and its corresponding control curve based upon the real time system characteristics on site. The pump control design toolbox may be used for any unknown hydronic systems applications to achieve the best pumping operation efficiency to save energy, with the pump control operation set up and maintenance procedures much easier. Besides all of those mentioned above, the introduction of the pump control design toolbox may have the potentials to trim down the pump manufacturing procedures for pump impeller trimming and testing significantly in the factory as well.

### 2. Pump control design toolbox

The pump control design tool technique disclosed herein, e.g., which is schematically shown in Figure. 2, is a pump and control redesign toolbox module, with which the pump curve as well as its corresponding control curve may be designed or redesigned based upon the system characteristics curve displayed in real time on a display or display screen, as well as or along with the flow and pressure requirement in system.

Here, the maximum pump curve (MPC) and end of system curve (EOC), labeled accordingly, may be derived based upon a pump model selected from a database which contains the corresponding pump characteristics data. The maximum pump operation hydronic area is defined by the maximum pump curve (MPC) and the end of system curve (EOC), within which a varible speed pump can normally run. Note that the varible speed pump set forth herein is the pump together with its corresponding variable speed drive.

The instant system curve (ISC) as well as the instant pump curve (IPC) at a motor speed of *n* may derived as well, labeled accordingly, based upon the system flow equation and pump affinity law, having the corresponding instant sytem flow rate and pressure given by sensors or a sensorless converter. The instant pump curve (IPC) may vary from *n* = 0 to the maximum pump curve (MPC) at *n* = 60 Hz, while the instant system curve (IPC) may vary from *Cᵥ* = 0 to *Cᵥ = C_{vEOC},* limited with the maximum pump operation region that the pump may be run upon. Consequenly, ultimate alarms may be set off, e.g., if the pumping operation is out of the maximum pump operation region to protect the pump from the EOC, and its associated adverse pump operating conditions.

With pump control design toolbox module disclosed herein, primarily, the designed pump curve (DPC) and design system curve (DSC), labeled accordingly, as well as its corresponding control curve (CCC), labeled accordingly, may be designed or redesigned interactively in real time and on site by the pump operator, e.g., based upon the system characteristics curve displayed on the display screen, as well as the flow and pressure requirement in system.

The pump and system curves designed (e.g., DPC and DSC in Fig. 2) to provide the desired pressure and flow rate in the system can be defined by the pump design point, or pump duty point, entered in the display screen by the pump operator. The control curve (e.g., CCC in Fig. 2), to derive an adaptive set point for pump control to meet the desired flow rate and pressure in system, is defined by two control parameters of the pressure "set point" and "curve shape". The pressure set point which defines the control curve position may be selected along the designed system curve (DSC). Here, the set point can be adjusted independently to allow the control curve to be a "little" closer to the system curve with respect to system flow requirement to achieve the better or improved pumping efficiency. The second parameter which defines the control curve shape is the "curve shape" parameter, e.g., which may be selected to define the control curve shape in between 0, "a linear control curve", and up to 100, "a quadratic curve" to allow the control curve to be "much" closer to the system to achieve a better or improved pumping efficiency.

With the pump operation region limited by the designed pump and system curves (e.g., DPC and DSC) for the given system, the instant pump curve (IPC) may vary from *n* = 0 up to the designed pump curve (DPC) at n = *n_{design}* Hz and the instant system curve (IPC) may vary from *Cᵥ* = 0 to *Cᵥ* = *C_{vdesign},* to provide the desired system flow and pressure instantly. Similarly, primary warnings may be set off, e.g., if the pumping operation is out of the designed pump operation region.

After the pump design curves as well as its corresponding control curve are set up, the pump may then be run, or be running, under one of the adaptive control modules set forth in reference nos. [1,2,5,7] in pump control to provide the desired flow rate and pressure in system.

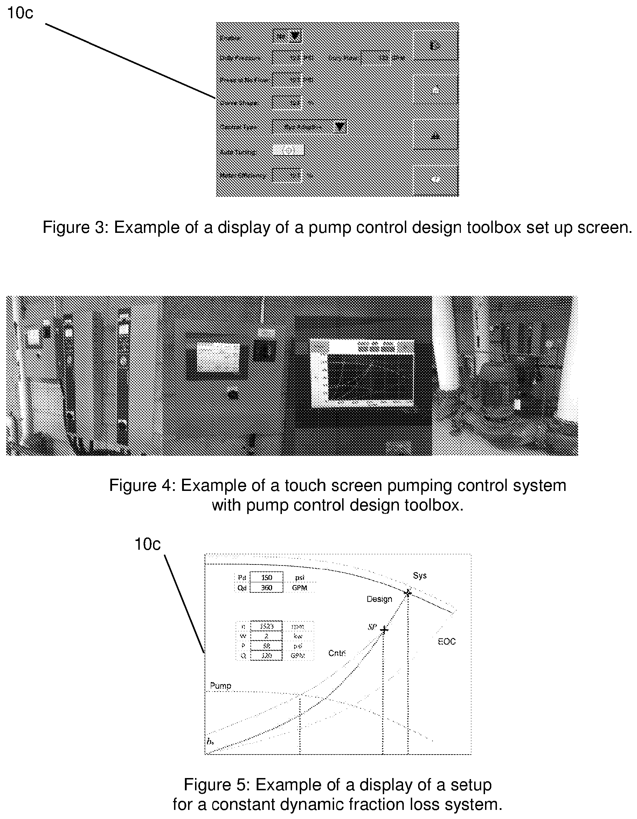

Figure 3 shows an example or prototype of a setup display screen for setting up the design and control curves with a dropdown or numeric box to enter or to select the setup data, which can enter the design point and parameters for defining the designed pump and system curves as well as its corresponding control curve. Alternatively and optimally, the design point and pressure set point discussed above may be entered in the graphic touch screen or drag "+" sympoles to the desired places directly.

In addition, numerical meters for pressure, flow rate, pump speed, power, and so forth, may be added in the graphic display screen directly as well to provide the real time reading outs of the pump operation and system operation data.

Figure 4 shows an example or prototype of a pumping control system with the pump control design toolbox, which displays the pump characteristics curves and control curve in a graphic touch screen.

By utilizing the pump control design toolbox integrated in a touch screen pump controller introduced above, the pump and its corresponding control can be designed much easier to meet the system flow and pressure requirement. With these new features in the pump control design toolbox, the pump control and its setup procedures can be reformulated significantly, with an interactive design or redesign on the pump and system characteristics curves and the corresponding control curve, setting up interactively in real time on site, flexible for any unknown hydronic system, and easy to achieve the best pumping operation efficiency to save energy, easy for pump operation maintenance, in addition to the potentials for the reduction of needs on tedious and costly impeller trimming procedures. In addition, all the information regarding the pump, system, control operation and their corresponding read outs are displayed graphically and numerically, which makes the pump operation and maintenance much easier and quicker for the pump operator to implement as well.

Several energy saving control algorithms or their functional modules, in particular the adaptive flow control and adaptive system control in reference nos. [1-2, 5, 7] set forth below, may be integrated with the pump control design toolbox in the pump control to save pumping operation energy. Here, the energy saving control functional module yields an adaptive pressure control set point with respect to the real time system flow rate or the instant system variation position.

With a hydronic system recognition module and a moving flow peak detector integrated with system and flow adaptive control in reference no. [7] set forth below, an automatic pump control setup function may be realized to derive the desired pump design point as well as a minimum pressure set point automatically. For that, with one push button or icon of "Auto Cntl" in the pump control design toolbox, the pump control can be setup and run automatically for a known or unknown hydronic system with the minimized pumping energy consumption.

An energy saving module regarding outdoor temperature variation as well as day and night temperature scheduling functional module may be realized and integrated into the pump control design toolbox in the pump control to save pumping operation energy in the consideration with those environmental circumstances as well.

The flow and pressure signals for the energy saving control as mentioned in the pump control design toolbox platform herein may be provided by a sensorless converter or by sensors as well, to obtain the real time pump, system and control characteristics curves displayed in screen.

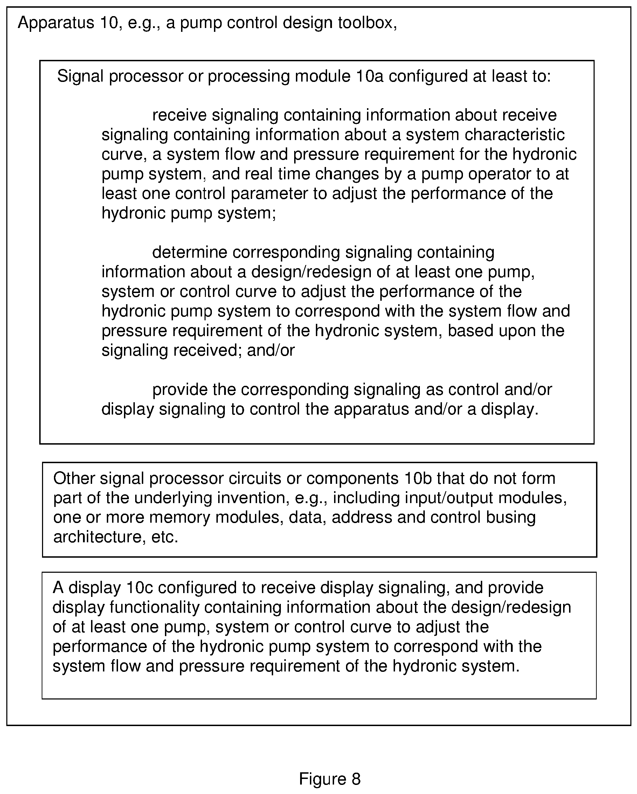

Moreover, the graphic touch screen display (e.g., see also element 10c in Fig. 8) in the pump control design toolbox will be one of the best ways for selecting or entering the design point and for displaying the curves and operation data as well. Alternatively, some low cost programmable logic devices (PLDs) or even printed circuit (PC) boards may also be feasible for a pump control design toolbox as well, as long as the pump design point and set point can be entered and the corresponding real time system coefficient of *Cᵥ* as a digital value can be provided for design and control set up reference. Also, some better graphic touch screen display techniques may be used as well by utilizing the techniques and procedures introduced in the pump control design toolbox.

### 3. General Setup Procedures

As one skilled in the art would appreciate, the highest pumping efficiency may be obtained when the control curve is aligned with the system curve. In other words, the adaptive pressure set point derived from the control curve should typically be on or nearby the system curve, so that the system will not be under pressured or over pressured in order to obtain a desired flow rate in system. The pumping operation energy may, therefore, be minimized to reduce the operation cost. With the pump control design toolbox introduced or set forth herein, the control curve can be set up to align with the system curve easily, in particular for a hydronic system with the constant dynamic friction loss in nature. For a varying dynamic friction loss system, such as a system with a control valve or a flow regulator, however, a little more attention may need to be paid in order to set the designed pump curve (DPC) and its corresponding control curve (CCC) up with the highest pumping efficiency to save energy.

The system variation regions for an unknown system in the field may be observed on the display screen easily by using the pump control design toolbox, according to the present invention. The desired pump design point and pressure set point, e.g., to defined the design pump curve (DPC) and the design system curve (DSC) as well as the corresponding control curve (CCC) to meet the system flow and pressure requirement with the highest pumping efficiency to save energy, may be defined accordingly. Several application examples to achieve the best efficiency pumping control over a system given by using the in-situ real time interactive pump control design toolbox are introduced as follows respectively.

### a) A constant dynamic fraction loss system:

Considering a system with the constant dynamic fraction loss, the pump design point, e.g., which defines the designed pump curve and the designed system curve, may be chosen first with respect to its system curve displayed on the display screen as well as the flow and pressure requirement in system. In general, the pump design point, e.g., to meet a maximum system pressure and flow rate requirement of (e.g., 150 psi = 1.0342136·10⁶ Pa, 360 gpm = 22.7124 l/s), can be set up right on the system curve displayed on the screen shown schematically in Figure 5, to achieve the best efficiency on pumpig system. Alternatively it can be varied a bit off toward the upper right on top of the point considered.

The pressure set point, e.g., which defines the control curve position, may be selected along and downwards the designed system curve (DSC) independently, and can be adjusted to allow the control curve to be a little closer to the system to achieve the better or improved pumping efficiency.

For instance, the pressure setpoint (SP) of 130 psi (= 896.31845·10³ Pa) together with a "curve shape" numeric number of 15 may be set up along the control curve to meet the maximum pressure reqirement in the system. Also, the control curve shape, defined by control "curve shape" parameter, may be selected as well inbetween 0, a "linear control curve", and 100, "a quadratic curve" to allow the control curve to be a little closer to the system to achieve the better or improved pumping efficiency.

After the pump design curves as well as its corresponding control curve set up, the pump may then be run, or be running, under one of the adaptive control modules in the pump control design toolbox to provide the desired flow rate and pressure in system.

### b) A varying system with a limited dynamic fraction loss varation region:

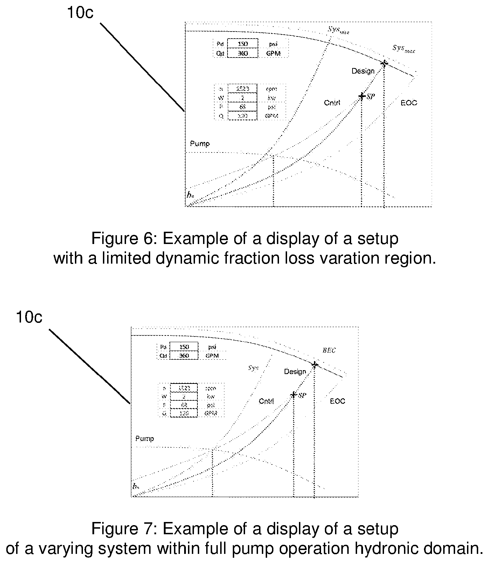

By way of further example, when considering a system with a varying dynamic fraction loss from its minmum (Cv=Cv_min) to its maximum (Cv-max), the pump design point, e.g., which defines the designed pump curve and system curve, may be chosen first with respect to system maximum position displayed on the display screen as well as the maximum flow and pressure requirement in system, for instance, (e.g., 150 psi = 1.0342136·10⁶ Pa, 360 gpm = 22.7124 l/s). The design point of the pressure and flow rate can be defined right on the maximum system curve (on or nearby the designed system curve) as schematically shown in Figure 6, to achieve the best efficiency on pumpig system possibly.

Similarly, the control curve pressure set point as well as its curve shape may be selected along and downwards the designed system curve independently and adjusted to allow the control curve to be closer to the system to achieve the better or improved pumping efficiency. For instance again, the presure setpoint (SP) of 130 psi (= 896.31845·10³ Pa) together with a "curve shape" numeric number of 15 may be set up along the control curve to meet the maximum pressure reqirement in the system. After the pump design curves as well as its corresponding control curve set up, the pump may then be run, or be running, under one of the adaptive control modules in the pump control design toolbox to provide the desired flow rate and pressure in system.

### c) A varying system within full pump operation hydronic domain:

By way of further example, when considering a system with a dynamic fraction loss from a shutoff position to a fully open position up to the pump best efficiency curve (BEC), the pump design point, e.g., which defines the designed pump curve and designed system curve, may be chosen with respect to the pump best efficiency curve (BEC) displayed on the display screen as well as the flow and pressure requirement in the system, as shown in Figure 7 schematically. The design point of the pressure and flow rate can be defined right on the BEC curve or a little offset to the upper right on top of that point alternatively, to achieve the best efficiency on pumpig system possibly.

The pressure set point, e.g., which defines the control curve, may now be selected along the designed system curve on BEC. Again, the pressure set point and curve shape can be adjusted independently as well to make the control curve a little closer to the system for the better or improved pumping efficiency.

In general, the pump duty point defined around its best efficiency point (BEP) through the pump BEC may be choosen as the pump design point, if there may be no other specific requirement given. Under that, during the pumping operation, the adaptive pressure setpoint derived is typically always near or close to PBC curve so that pump operation energy may be saved accordingly.

### Figure 8: Implementation of Signal Processing Functionality

By way of further example, Figure 8 shows apparatus 10 according to some embodiments of the present invention for implementing the associated signal processing functionality. The apparatus features a signal processor or processing module 10a configured at least to:
receive signaling containing information about a system characteristic curve, a pump characteristic curve, a system flow and pressure requirement for the hydronic pump system and real time changes by a pump operator to at least one control parameter to adjust the performance of the hydronic pump system; and
determine corresponding signaling containing information about a design/redesign of the pump curve, system curve and control curve to adjust the performance of the hydronic pump system to correspond with the system flow and pressure requirement of the hydronic system, based upon the signaling received.

In operation, the signal processor or processing module 10a may be configured to provide corresponding signaling as control and/or display signaling to control the hydronic pump system and/or to implement display functionality on a display 10c (e.g., see Figure 8) related to the pump control design toolbox.

The signal processor or processing module 10a may be configured in, or form part of, the pump control design toolbox, or a pump system and/or a pump system control, e.g., which may include or be implemented in conjunction with one or more pump controls or controllers configured therein. By way of example, embodiments are envisioned in which the apparatus is a pump system having a pump system controller or controller with the signal processor or processing module 10a, and embodiments are envisioned in which the apparatus is, or takes the form of, the one or more pump controls or controllers having the signal processor or processing module 10a.

By way of example, the functionality of the apparatus 10 may be implemented using hardware, software, firmware, or a combination thereof. In a typical software implementation, the apparatus 10 would include one or more microprocessor-based architectures having, e. g., at least one signal processor or microprocessor like element 10a. One skilled in the art would be able to program with suitable program code such a microcontroller-based, or microprocessor-based, implementation to perform the functionality described herein without undue experimentation. For example, the signal processor or processing module 10a may be configured, e.g., by one skilled in the art without undue experimentation, to receive signaling containing information about a system characteristic curve, a pump characteristic curve, a system flow and pressure requirement for the hydronic pump system, and real time changes by a pump operator to at least one control parameter to adjust the performance of the hydronic pump system, consistent with that disclosed herein.

Moreover, the signal processor or processing module 10a may be configured, e.g., by one skilled in the art without undue experimentation, to determine the corresponding signaling containing information about a design/redesign of at least one pump, system or control curve to adjust the performance of the hydronic pump system to correspond with the system flow and pressure requirement of the hydronic system, based upon the signaling received, consistent with that disclosed herein.

The invention is not intended to be limited to any particular implementation using technology either now known or later developed in the future. The invention is intended to include implementing the functionality of the processors 10a as stand-alone processor, signal processor, or signal processor module, as well as separate processors or processor modules, as well as some combination thereof.

The apparatus 10 may also include, e.g., other signal processor circuits or components 10b, including random access memory or memory module (RAM) and/or read only memory (ROM), input/output devices and control, and data and address buses connecting the same, and/or at least one input processor and at least one output processor, e.g., which would be appreciate by one skilled in the art.

### Various Points of Novelty

The present invention may also include, or take the form of, one or more of the following embodiments/implementations:
According to some embodiments, the present invention may include, or take the form of, implementations where the pump control design toolbox technique for a pump control includes primarily an in-situ real time interactive pump control design toolbox, with which a desired pump control curve may be obtained throughout a design pump characteristics curve reconfigured interactively and real time based upon the system characteristics on site, to meet the flow and pressure requirement in system. The pump control design toolbox makes the pump control setup procedures reformulated significantly, with the pump control operation set up and maintenance much easier and for any unknown hydronic systems applications to achieve the best pumping operation efficiency to save energy. It may considerably reduce the requirement for pump manufacturing procedures on impeller trimming in factory as well.

According to some embodiments, the present invention may include, or take the form of, implementations where the pump control design toolbox technique may include a touch screen module with the pump control characteristics curves and design numeric settings, e.g., which is schematically shown in Figs. 2-4. Here, the maximum pump curve (MPC) and end of system curve (EOC), is derived based upon a pump model selected from the database which contains the corresponding pump characteristics data. The maximum pump operation hydronic region is defined by the maximum pump curve (MPC) and the end of system curve (EOC), within which a varible speed pump can normally run. Note that the varible speed pump set forth herein may be configured as the pump together with its varible speed drive. The instant system curve (ISC) as well as the instant pump curve (IPC) at a motor speed of n may derived as well, based upon the syslem flow equation and pump affinity law, having the corresponding instant sytem flow rate and pressure given by sensors or a sensorless converter. The instant pump curve (IPC) may vary from *n* = 0 to the maximum pump curve (MPC) at *n* = 60 Hz, while the instant system curve (ISC) may vary from *Cᵥ* = 0 to *Cᵥ* = *C_{vEOC}*, limited with the maximum pump operation region that pump may be run upon. Consequenly, ultimate alarms may be set off, e.g., if the pumping operation is out of the maximum pump operation region to protect the pump from EOC. With an in-situ pump control design toolbox module disclosed herein, primarily, the designed pump curve (DPC) and the design system curve (DSC) as well as its corresponding control curve (CCC) may be designed or redesigned interactively in real time and on site, e.g., based upon the system characteristics curve and the pump characteristics curve displayed on the display screen as well as the flow and pressure requirement in system. The pump and system curves designed to provide the desired pressure and flow rate in the system can be defined by the pump design point, or by the pump duty point, entered in the display screen, e.g., by the pump operator. The control curve, e.g., to derive an adaptive set point for pump control to meet the desired flow rate and pressure in system, may be defined by two control parameters of the pressure "set point" and "curve shape". The pressure set point which defines the control curve position may be selected along the designed system curve. Here, the set point can be adjusted independently to allow the control curve to be a little closer to the system curve with respect to system flow requirement to achieve the better or improved pumping efficiency. The second parameter which defines the control curve shape is the "curve shape" parameter with which may be selected to define the control curve shape in between 0, "a linear control curve", and 100, "a quadratic curve" to allow the control curve to be closer to the system to achieve the better or improved pumping efficiency. With the pump operation region limited by the designed pump curve (DPC) and the designed system curve (DSC) for the given system, the instant pump curve may vary from *n* = 0 up to the designed pump curve (DPC) at *n* = *n_{design}* Hz and the instant system curve (ISC) may vary from *Cᵥ* = 0 to *Cᵥ* = *C_{vdesign},* to provide the desired system flow and pressure instantly. Similarly, primary warnings may be set off, e.g., if the pumping operation is out of the designed pump operation region. After the pump design curves as well as its corresponding control curve set up, the pump may then be run, or be running, under one of the adaptive control modules integrated with pump control design toolbox to provide the desired flow rate and pressure in system.

According to some embodiments, the present invention may include, or take the form of, implementations where the settings for the design and control curves in the pump control design toolbox technique may be realized with a dropdown or nemeric box to enter or to select the setup data as shown in Fig. 3, which can be used to enter the design point and parameters for defining the designed pump and system curves as well as its control curve. Alternatively and optimally, the design point and pressure set point discussed above may be entered in the graphic touch screen or drag "+" sympoles to the desired places directly.

According to some embodiments, the present invention may include, or take the form of, implementations where the pump control design toolbox technique may include some numerical meters as well for pressure, flow rate, pump speed, power, and so forth, which may be added in the graphic screen displayed directly to provide the real time reading outs of pump operation and system operation data.

According to some embodiments, the present invention may include, or take the form of, implementations where the maximum pump curve (MPC) and its corresponding end of curve (EOC) in the pump control design toolbox technique may include the data array entered on the display screen through the dropdown box or hard coded data. Preferably, the data is selectable through the integrated pump manufacturer database.

According to some embodiments, the present invention may include, or take the form of, implementations where the instant real time flow rate and pressure signals utilized in the pump control design toolbox technique may include the signals derived from all feasible technique including, sensors, sensorless, or their alternatives, e.g., consistent with that set forth herein. The signals may be used for deriving real time system curve and adaptive pressure control set point as well.

According to some embodiments, the present invention may include, or take the form of, implementations where the pump control design toolbox technique disclosed herein may also include some other PLDs or PC boards with all or partial functionalities and procedures described herein on the touch screen, as long as the pump and control characteristics design or redesign concept for obtaining a desired pump control to meet system flow and pressure requirement to save energy described here can be realized.

According to some embodiments, the present invention may include, or take the form of, implementations where the control curve for the adaptive pump controls integrated with the pump control design toolbox technique may include several energy saving control algorithms or their functional modules disclosed in reference nos. [1-2,5,7] set forth herein, e.g., to derive an adaptive pressure control set point with respect to the real time system flow rate and pressure at an instant system variation position for saving pump operation energy.

According to some embodiments, the present invention may include, or take the form of, implementations where the adaptive pump controls integrated with the pump control design toolbox technique may include a hydronic system recognition module and a moving flow peak detector integrated with system and flow adaptive control set forth in reference no. [7] herein, e.g., an automatic pump control setup function may be realized to derive the desired pump design point as well as minimum pressure set point automatically. For that, and by way of example, with a suitable one push button or icon for an "Auto Cntl" in the pump control design toolbox, the pump control can be setup and run automatically for a known or unknown hydronic system with the minimized pumping energy consumption.

According to some embodiments, the present invention may include, or take the form of, implementations where an energy saving module integrated with the pump control design toolbox technique may include an energy saving module regarding outdoor temperature variation as well as a day and night temperature scheduling functional module, e.g., which may be realized and integrated into the pump control design toolbox in the pump control to save pumping operation energy in the consideration with those environmental circumstances as well.

According to some embodiments, the present invention may include, or take the form of, implementations where the pumping hydronic system may include all close loop or open loop hydronic pumping systems, such as primary pumping systems, secondary pumping systems, water circulating systems, and pressure booster systems. The systems mentioned here may consist of a single zone or multiple zones as well.

According to some embodiments, the present invention may include, or take the form of, implementations where the hydronic signals derived by sensors or a sensorless converter disclosed herein may include pump differential pressure, system pressure or zone pressure, system or zone flow rate, and so forth.

According to some embodiments, the present invention may include, or take the form of, implementations where control signals transmitted and wiring technologies disclosed herein may include all conventional sensing and transmitting technique that are used currently. Preferably, wireless sensor signal transmission technologies may be optimized.

According to some embodiments, the present invention may include, or take the form of, implementations where the pumps disclosed herein for the hydronic pumping systems disclosed herein may include a single pump, a circulator, a group of parallel ganged pumps or circulators, a group of serial ganged pumps or circulators, or their combinations.

### Other Related Applications

The application is related to patent applications that form part of the overall family of technologies developed by one or more of the inventors herein, assigned to the assignee of the present application, and disclosed in the patent documents, as follows:
Reference [1]: U.S. application serial no. 12/982,286 (US 2012/ 173 027 A1), filed 30 December 2010, entitled "Method and apparatus for pump control using varying equivalent system characteristic curve, AKA an adaptive control curve," which issued as U.S. Patent No. 8,700,221 on 15 April 2014;
Reference [2]: U.S. application serial no. 13/717,086 (US 2014/ 005 841 A1), filed 17 December 2012, entitled "Dynamic linear control methods and apparatus for variable speed pump control," which claims benefit to U.S. provisional application no. 61/576,737, filed 16 December 2011, now abandoned;
Reference [3]: U.S. application serial no. 14/091,795 (US 2014/ 249 682 A1), filed 27 November 2013, entitled "3D sensorless conversion method and apparatus," which claims benefit to U.S. provisional application no. 61/771,375, filed 1 March 2013, now abandoned;
Reference [4]: U.S. application serial no. 14/187,817 (US 2014/ 288 716 A1), filed 24 February 2014, entitled "A Mixed Theoretical And Discrete Sensorless Converter For Pump Differential Pressure And Flow Monitoring," which claims benefit to U.S. provisional application no. 61/803,258, filed 19 March 2013, now abandoned;
Reference [5]: U.S. application serial no. 14/339,594 (US 2015/ 032 271 A1), filed 24 July 2014, entitled "Sensorless Adaptive Pump Control with Self-Calibration Apparatus for Hydronic Pumping System," which claims benefit to U.S. provisional application serial no. 61/858,237 filed 25 July 2013, now abandoned;
Reference [6]: U.S. application serial no. 14/680,667 (US 2016/ 010 639 A1), filed 7 April 2015, entitled "A Best-fit affinity sensorless conversion technique for pump differential pressure and flow monitoring," which claims benefit to provisional patent application serial no. 61/976,749, filed 8 April 2014, now abandoned;
Reference [7]: U.S. application serial no. 14/730,871 (US 2016/ 017 889 A1), filed 4 June 2015, entitled "System and flow adaptive sensorless pumping control apparatus energy saving pumping applications," which claims benefit to provisional patent application serial no. 62/007,474, filed 4 June 2014, now abandoned;
Reference [8]: U.S. application no. 15/044,670, filed 16 February 2016 (US 2016/ 246 290 A1), entitled "Detection means for sensorless pumping control applications," which claims benefit to U.S. provisional application no. 62/116,031, filed 13 February 2015, entitled "No flow detection means for sensorless pumping control applications;"
Reference [9]: U.S. application serial no. 15/173,781 (US 2016/ 356 276 A1), filed 6 June 2016, entitled "Direct numeric affinity pumps sensorless converter," which claims benefit to provisional patent application serial no. 62/170,997, filed 4 June 2015, now abandoned; and
Reference [10]: U.S. application serial no. 15/217,070 (US 2017/ 107 992 A1), filed 22 July 2016, entitled "Advanced real time graphic sensorless energy saving pump control system," which claims benefit to provisional patent application serial no. 62/196,355, now abandoned;
which are all assigned to the assignee of the instant patent application.

### The Invention

Although the present invention is described by way of example in relation to a centrifugal pump, the invention is intended to include using the same in relation to other types or kinds of pumps.

Although the invention has been described and illustrated with respect to exemplary embodiments thereof, the foregoing and various other additions and omissions may be made therein and thereto provided they fall within the scope of the present invention which is defined by the following claims.

## Claims

1. An apparatus (10) for providing variable speed pump control in a hydronic pump system having a system flow and pressure requirement, comprising
a signal processor or processing module (10a) configured to:
receive signaling containing information about
- an instant system characteristic curve (Sys) displayed on a display (10c) for viewing by a pump operator of the hydronic pump system,
- an instant pump characteristic curve displayed on a display (10c) for viewing by a pump operator of the hydronic pump system,
- a system flow and pressure requirement displayed on the display (10c) for viewing by the pump operator of the hydronic pump system, and
- real time changes by the pump operator to at least one control parameter to adjust the performance of the hydronic pump system; **characterised in that** the signal processor or processing module (10a) is further configured to:
determine corresponding signaling containing information about a design/redesign of a pump curve (DPC), a system curve (DSC) and a control curve (CCC) to adjust the performance of the hydronic pump system to correspond with the system characteristics curve (Sys), the system flow and pressure requirement and the real-time changes of the hydronic system, based upon the signaling received.

2. The apparatus (10) according to claim 1, wherein the apparatus (10) includes, or forms part of, a pump control design toolbox configured with a combination of the signal processor or processing module (10a) and the display (10c) for providing display functionality related to the pump control design toolbox.

3. The apparatus (10) according to claim 1 or 2, wherein
the signal processor or processing module is configured to provide the corresponding signaling as display control signaling; and
the apparatus (10) comprises a display (10c) that responds to the display control signaling and provides display signaling containing information about:
at least one of the system characteristic curve and the system flow and pressure requirement for the hydronic pump system; and
a pump control design toolbox set up screen having the at least one control parameter to adjust the performance of the hydronic pump system.

4. The apparatus (10) according to claim 3, wherein the display (10c) is a touchscreen display for the pump operator to touch in order to make the real time changes by the pump operator to the at least one control parameter to adjust the performance of the hydronic pump system.

5. The apparatus (10) according to claim 3 or 4, wherein
the at least one control parameter includes a "set point" parameter and a control "curve shape" parameter; and
the real time changes by the pump operator include an adjustment to either the "set point" parameter, or the control "curve shape" parameter, or both the "set point" parameter and the control "curve shape" parameter.

6. The apparatus (10) according to one of the preceding claims 3 to 5, wherein the display (10c) responds to the display control signaling and provides the at least one pump, system or control curve, including an instant pump curve, an instant system curve and a control curve.

7. The apparatus (10) according to one of the preceding claims 3 to 6, wherein
the display control signaling contains information about a designed system curve and a designed pump curve; and
the display (10c) provides the designed system curve and designed pump curve in real time for viewing by the pump operator.

8. The apparatus (10) according to one of the preceding claims 3 to 7, wherein the display (10c) responds to the display control signaling and provides one or more of the following:
pump pressure in psi,
pump flow in gpm,
pump power in kW and
pump motor speed n in rpm.

9. The apparatus (10) according to one of the preceding claims 3 to 8, wherein the display (10c) responds to the display control signaling and provides a pump control design toolbox set up screen that includes one or more drop down menus to enter or select setup data by the pump operator, including the at least one control points for defining designed pump, system and control curves.

10. A method for providing variable speed pump control in a hydronic pump system having a system flow and pressure requirement, comprising the steps of
receiving in a signal processor or signal processing module (10a) signaling containing information about
- an instant system characteristic curve (Sys) displayed on a display (10c) for viewing by a pump operator of the hydronic pump system,
- an instant pump characteristic curve displayed on a display (10c) for viewing by a pump operator of the hydronic pump system,
- a system flow and pressure requirement displayed on the display (10c) for viewing by the pump operator of the hydronic pump system, and
- real time changes by the pump operator to at least one control parameter to adjust the performance of the hydronic pump system; the method being **characterised by** the steps of
determining in the signal processor or signal processing module (10a) corresponding signaling containing information about a design/redesign of a pump curve (DPC), system curve (DSC) and a control curve (CCC) to adjust the performance of the hydronic pump system to correspond with the system characteristic curve (Sys), the system flow and pressure requirement and the real-time changes of the hydronic pump system, based upon the signaling received.

11. The method according to claim 10 wherein the method comprises configuring the signal processor or signal processing module (10a) in, or as part of, a pump control design toolbox having the display (10c) for providing display functionality related to the pump control design toolbox.

12. The method according to claim 10 or 11, wherein the method comprises:
configuring the signal processor or processing module (10a) to provide the corresponding signaling as display control signaling; and
responding with the display (10c) to the display control signaling and providing display signaling containing information about:
at least one of the system characteristic curve and the system flow and pressure requirement for the hydronic pump system; and
a pump control design toolbox set up screen having the at least one control parameter to adjust the performance of the hydronic pump system.

13. The method according to one of the claims 10 to 12, wherein the method comprises:
using as the display (10c) a touchscreen display for the pump operator to touch in order to make the real time changes by the pump operator to the at least one control parameter to adjust the performance of the hydronic pump system.

14. The method according to claim 12 or 13, wherein the method comprises:
including as the at least one control parameter a "set point" parameter and a control "curve shape" parameter; and
including as the real time changes by the pump operator an adjustment to either the "set point" parameter, or the control "curve shape" parameter, or both the "set point" parameter and the control "curve shape" parameter and/or
including in the display control signaling information about a designed system curve and a designed pump curve; and
providing from the display (10c) the designed system curve and designed pump curve in real time for viewing by the pump operator.

15. The method according to one of the preceding claims 12 to 14, wherein the method comprises:
responding with the display (10c) to the display control signaling and providing the at least one pump, system or control curve, including an instant pump curve, an instant system curve and a control curve and/or
responding with the display (10c) to the display control signaling and providing one or more of the following:
pump pressure in psi,
pump flow in gpm,
pump power in kW and
pump motor speed n in rpm and/or
responding with the display (10c) to the display control signaling and providing a pump control design toolbox set up screen that includes one or more drop down menus to enter or select setup data by the pump operator, including the at least one control points for defining designed pump, system and control curves.

## Patentansprüche

1. Vorrichtung (10) zur Steuerung einer variablen Drehzahl einer Pumpe in einem Flüssigkeitskreislauf-Pumpensystem mit einer systemseitigen Anforderung an Durchfluss und Druck, umfassend
einen Signalprozessor oder ein Verarbeitungsmodul (10a), der bzw. das ausgebildet ist:
eine Signalisierung zu empfangen, die Informationen enthält über
- eine momentane Systemcharakteristik-Kennlinie (Sys), die auf einem Bildschirm (10c) zur Einsichtnahme durch einen Pumpenbediener des Flüssigkeitskreislauf-Pumpensystems angezeigt wird,
- eine momentane Pumpencharakteristik-Kennlinie, die auf einem Bildschirm (10c) zur Einsichtnahme durch einen Pumpenbediener des Flüssigkeitskreislauf-Pumpensystems angezeigt wird,
- eine systemseitige Anforderung an Durchfluss und Druck, die auf dem Bildschirm (10c) zur Einsichtnahme durch den Pumpenbediener des Flüssigkeitskreislauf-Pumpensystems angezeigt wird, und
- von dem Pumpenbediener in Echtzeit vorgenommene Änderungen an mindestens einem Steuerparameter zur Anpassung der Leistung des Flüssigkeitskreislauf-Pumpensystems;
**dadurch gekennzeichnet, dass** der Signalprozessor oder das Verarbeitungsmodul (10a) ferner ausgebildet ist:
eine entsprechende Signalisierung zu ermitteln, die Informationen über eine Auslegung/ Neugestaltung einer Pumpenkennlinie (DPC), einer Systemkennlinie (DSC) und einer Steuerkennlinie (CCC) enthält, um die Leistung des Flüssigkeitskreislauf-Pumpensystems anzupassen, dass sie der Systemcharakteristik-Kennlinie (Sys), der systemseitigen Anforderung an Durchfluss und Druck und den Echtzeitänderungen in dem Flüssigkeitskreislaufsystem entspricht, abhängig von der empfangenen Signalisierung.

2. Vorrichtung (10) nach Anspruch 1, wobei die Vorrichtung (10) eine Toolbox zur Pumpensteuerungsauslegung umfasst oder einen Teil davon bildet, die mit einer Kombination aus dem Signalprozessor oder Verarbeitungsmodul (10a) und dem Bildschirm (10c) ausgebildet ist, um Anzeigefunktionen im Zusammenhang mit der Toolbox zur Pumpensteuerungsauslegung bereitzustellen.

3. Vorrichtung (10) nach Anspruch 1 oder 2, wobei
der Signalprozessor oder das Verarbeitungsmodul ausgebildet ist, die entsprechende Signalisierung als Anzeigesteuersignalisierung bereitzustellen; und
die Vorrichtung (10) einen Bildschirm (10c) umfasst, der auf die Anzeigesteuersignalisierung reagiert und eine Anzeigesignalisierung bereitstellt, die Informationen enthält über:
die Systemcharakteristik-Kennlinie und/oder die systemseitige Anforderung an Durchfluss und Druck für das Flüssigkeitskreislauf-Pumpensystem; und
eine Bildschirmansicht zur Einrichtung der Toolbox zur Pumpensteuerungsauslegung, die den mindestens einen Steuerparameter zur Anpassung der Leistung des Flüssigkeitskreislauf-Pumpensystems umfasst.

4. Vorrichtung (10) nach Anspruch 3, wobei der Bildschirm (10c) ein berührungssensitiver Bildschirm ist, den der Pumpenbediener berühren kann, um die Echtzeitänderungen an dem mindestens einen Steuerparameter durch den Pumpenbediener vorzunehmen, um die Leistung des Flüssigkeitskreislauf-Pumpensystems anzupassen.

5. Vorrichtung (10) nach Anspruch 3 oder 4, wobei
der mindestens eine Steuerparameter einen "Sollwert"-Parameter und einen Steuerparameter für die "Kurvenform" umfasst; und
die von dem Pumpenbediener vorgenommenen Echtzeitänderungen eine Anpassung entweder des "Sollwert"-Parameters oder des Steuerparameters für die "Kurvenform" oder sowohl des "Sollwert"-Parameters als auch des Steuerparameters für die "Kurvenform" umfassen.

6. Vorrichtung (10) nach einem der vorhergehenden Ansprüche 3 bis 5, wobei der Bildschirm (10c) auf die Anzeigesteuersignalisierung reagiert und die mindestens eine Pumpen-, System- oder Steuerkennlinie bereitstellt, einschließlich einer momentanen Pumpenkennlinie, einer momentanen Systemkennlinie und einer Steuerkennlinie.

7. Vorrichtung (10) nach einem der vorhergehenden Ansprüche 3 bis 6, wobei
die Anzeigesteuersignalisierung Informationen über eine Soll-Systemkennlinie und eine Soll-Pumpenkennlinie enthält; und
der Bildschirm (10c) die Soll-Systemkennlinie und die Soll-Pumpenkennlinie in Echtzeit zur Einsichtnahme durch den Pumpenbediener bereitstellt.

8. Vorrichtung (10) nach einem der vorhergehenden Ansprüche 3 bis 7, wobei der Bildschirm (10c) auf die Anzeigesteuersignalisierung reagiert und eines oder mehrere der folgenden Größen darstellt:
Pumpendruck in psi,
Pumpendurchfluss in gpm,
Pumpenleistung in kW und
Drehzahl n des Pumpenmotors in U/min.

9. Vorrichtung (10) nach einem der vorhergehenden Ansprüche 3 bis 8, wobei der Bildschirm (10c) auf die Anzeigesteuersignalisierung reagiert und eine Bildschirmansicht zur Einrichtung der Toolbox zur Pumpensteuerungsauslegung darstellt, die eines oder mehrere Dropdown-Menüs enthält, über die der Pumpenbediener Einrichtungsdaten eingeben oder auswählen kann, einschließlich der Eingabe oder Auswahl von mindestens einem Steuerpunkt zur Definition der Soll-Pumpen-, Soll-System- und Soll-Steuerkennlinien.

10. Verfahren zur Steuerung einer variablen Drehzahl einer Pumpe in einem Flüssigkeitskreislauf-Pumpensystem mit einer systemseitigen Anforderung an Durchfluss und Druck, umfassend die folgenden Schritte:
Empfangen einer Signalisierung in einem Signalprozessor oder Signalverarbeitungsmodul (10a), die Informationen enthält über
- eine momentane Systemcharakteristik-Kennlinie (Sys), die auf einem Bildschirm (10c) zur Einsichtnahme durch einen Pumpenbediener des Flüssigkeitskreislauf-Pumpensystems angezeigt wird,
- eine momentane Pumpencharakteristik-Kennlinie, die auf einem Bildschirm (10c) zur Einsichtnahme durch einen Pumpenbediener des Flüssigkeitskreislauf-Pumpensystems angezeigt wird,
- eine systemseitige Anforderung an Durchfluss und Druck, die auf dem Bildschirm (10c) zur Einsichtnahme durch den Pumpenbediener des Flüssigkeitskreislauf-Pumpensystems angezeigt wird, und
- von dem Pumpenbediener in Echtzeit vorgenommene Änderungen an mindestens einem Steuerparameter zur Anpassung der Leistung des Flüssigkeitskreislauf-Pumpensystems;
wobei das Verfahren durch die folgenden Schritte gekennzeichnet ist:
in dem Signalprozessor oder Signalverarbeitungsmodul (10a) Ermitteln einer entsprechenden Signalisierung, die Informationen über eine Auslegung/ Neugestaltung einer Pumpenkennlinie (DPC), einer Systemkennlinie (DSC) und einer Steuerkennlinie (CCC) enthält, um die Leistung des Flüssigkeitskreislauf-Pumpensystems anzupassen, dass sie der Systemcharakteristik-Kennlinie (Sys), der systemseitigen Anforderung an Durchfluss und Druck und den Echtzeitänderungen in dem Flüssigkeitskreislauf-Pumpensystem entspricht, abhängig von der empfangenen Signalisierung.

11. Verfahren nach Anspruch 10, wobei das Verfahren das Konfigurieren des Signalprozessors oder des Verarbeitungsmoduls (10a) innerhalb einer oder als Teil einer Toolbox zur Pumpensteuerungsauslegung umfasst, die über den Bildschirm (10c) verfügt, um Anzeigefunktionen im Zusammenhang mit der Toolbox zur Pumpensteuerungsauslegung bereitzustellen.

12. Verfahren nach Anspruch 10 oder 11, wobei das Verfahren umfasst:
Konfigurieren des Signalprozessors oder des Verarbeitungsmoduls (10a), um die entsprechende Signalisierung als Anzeigesteuersignalisierung bereitzustellen; und
Reagieren mit dem Bildschirm (10c) auf die Anzeigesteuersignalisierung und Bereitstellen einer Anzeigesignalisierung, die Informationen enthält über:
die Systemkennlinie und/oder der systemseitigen Anforderung an Durchfluss und Druck des Flüssigkeitskreislauf-Pumpensystems; und
eine Bildschirmansicht zur Einrichtung der Toolbox zur Pumpensteuerungsauslegung, die den mindestens einen Steuerparameter zur Anpassung der Leistung des Flüssigkeitskreislauf-Pumpensystems anzeigt.

13. Verfahren nach einem der Ansprüche 10 bis 12, wobei das Verfahren umfasst:
Verwendung eines berührungssensitiven Bildschirms als Bildschirm (10c), den der Pumpenbediener berühren kann, um in Echtzeit die Änderungen an dem mindestens einen Steuerparameter vorzunehmen, um die Leistung des Flüssigkeitskreislauf-Pumpensystems anzupassen.

14. Verfahren nach Anspruch 12 oder 13, wobei das Verfahren umfasst:
Einbeziehung eines "Sollwert"-Parameters und eines "Kurvenform" Steuerparameters als den mindestens einen Steuerparameter; und
Einbeziehung einer Anpassung entweder des "Sollwert"-Parameters oder des "Kurvenform" Steuerparameters oder sowohl des "Sollwert"-Parameters als auch des "Kurvenform" Steuerparameters als die von dem Pumpenbediener vorgenommenen Änderungen in Echtzeit, und/oder
Einbeziehung von Informationen über eine Soll-Systemkennlinie und eine Soll-Pumpenkennlinie in der Anzeigesteuersignalisierung; und
Bereitstellen der Soll-Systemkennlinie und der Soll-Pumpenkennlinie in Echtzeit auf dem Bildschirm (10c) zur Betrachtung durch den Pumpenbediener.

15. Verfahren nach einem der vorhergehenden Ansprüche 12 bis 14, wobei das Verfahren umfasst:
Reagieren mit dem Bildschirm (10c) auf die Anzeigesteuersignalisierung und Bereitstellen der mindestens einen Pumpen-, System- oder Steuerkennlinie, einschließlich einer momentanen Pumpenkennlinie, einer momentanen Systemkennlinie und einer Steuerkennlinie und/oder
Reagieren über den Bildschirm (10c) auf die Anzeigesteuersignalisierung und Bereitstellen einer oder mehrerer der folgenden Größen:
Pumpendruck in psi,
Pumpendurchfluss in gpm,
Pumpenleistung in kW und
Pumpenmotordrehzahl n in U/min und/oder
Reagieren über den Bildschirm (10c) auf die Anzeigesteuersignalisierung und Bereitstellen einer Bildschirmansicht zur Einrichtung der Toolbox zur Pumpensteuerungsauslegung, die eines oder mehrere Dropdown-Menüs enthält, über die der Pumpenbediener Einrichtungsdaten eingeben oder auswählen kann, einschließlich der Eingabe oder Auswahl von mindestens einem Steuerpunkt zur Definition der Soll-Pumpen-, Soll-System- und Soll-Steuerkennlinien.

## Revendications

1. Dispositif (10) destiné à assurer la commande d'une pompe à vitesse variable dans un système de pompage hydronique présentant des exigences de débit et de pression du système, comprenant
un processeur de signaux ou un module de traitement (10a) configuré pour :
recevoir des signaux contenant des informations concernant
- une courbe caractéristique instantanée du système (Sys) affichée sur un écran (10c) à l'intention de l'opérateur de la pompe du système de pompage hydronique,
- une courbe caractéristique instantanée de la pompe affichée sur un écran (10c) à l'intention de l'opérateur de la pompe du système de pompage hydronique,
- des exigences de débit et de pression du système affichées sur l'écran (10c) à l'intention de l'opérateur de la pompe du système de pompage hydronique, et
- des modifications en temps réel apportées par l'opérateur de la pompe à au moins un paramètre de régulation afin d'ajuster les performances du système de pompage hydronique ;
**caractérisé en ce que** le processeur de signaux ou module de traitement (10a) est en outre configuré pour :
déterminer des signaux correspondants contenant des informations relatives à la conception ou à la reconception d'une courbe de pompe (DPC), d'une courbe du système (DSC) et d'une courbe de régulation (CCC) afin d'ajuster les performances du système de pompage hydronique pour qu'elles correspondent à la courbe des caractéristiques du système (Sys), aux exigences de débit et de pression du système et aux modifications en temps réel du système hydronique, sur la base des signaux reçus.

2. Dispositif (10) selon la revendication 1, dans lequel le dispositif (10) comprend, ou fait partie d'une boîte à outils de conception de commande de pompe configurée avec une combinaison du processeur de signaux ou du module de traitement (10a) et de l'écran (10c) pour fournir des fonctionnalités d'affichage liées à la boîte à outils de conception de commande de pompe.

3. Dispositif (10) selon la revendication 1 ou 2, dans lequel
le processeur de signaux ou le module de traitement est configuré pour fournir les signaux correspondants en tant que signaux de commande d'affichage ; et
le dispositif (10) comprend un écran (10c) qui répond aux signaux de commande d'affichage et fournit des signaux d'affichage contenant des informations sur :
au moins l'une parmi la courbe caractéristique du système et les exigences de débit et de pression du système de pompage hydronique ; et
un écran de configuration de la boîte à outils de conception de la commande de pompe affichant ledit au moins un paramètre de commande permettant d'ajuster les performances du système de pompage hydronique.

4. Dispositif (10) selon la revendication 3, dans lequel l'écran (10c) est un écran tactile que l'opérateur de la pompe peut toucher afin d'apporter des modifications en temps réel à ledit au moins un paramètre de commande pour ajuster les performances du système de pompage hydronique.

5. Dispositif (10) selon la revendication 3 ou 4, dans lequel
le au moins un paramètre de commande comprend un paramètre de « point de consigne » et un paramètre de « forme de courbe » de commande ; et
les modifications en temps réel effectuées par l'opérateur de la pompe comprennent un ajustement soit du paramètre de « point de consigne », soit du paramètre de « forme de courbe » de commande, soit à la fois du paramètre de « point de consigne » et du paramètre de « forme de courbe » de commande.

6. Dispositif (10) selon l'une des revendications 3 à 5 précédentes, dans lequel l'écran (10c) répond aux signaux de commande d'affichage et fournit la au moins une courbe de pompe, de système ou de commande, comprenant une courbe de pompe instantanée, une courbe de système instantanée et une courbe de commande.

7. Dispositif (10) selon l'une des revendications 3 à 6 précédentes, dans lequel
les signaux de commande d'affichage contiennent des informations concernant une courbe du système théorique et une courbe de la pompe théorique ; et
l'écran (10c) affiche en temps réel la courbe du système théorique et la courbe de la pompe théorique afin que l'opérateur de la pompe puisse les visualiser.

8. Dispositif (10) selon l'une des revendications 3 à 7 précédentes, dans lequel l'écran (10c) répond aux signaux de commande d'affichage et fournit un ou plusieurs des éléments suivants :
la pression de la pompe en psi,
le débit de la pompe en gpm,
la puissance de la pompe en kW et
la vitesse de rotation n du moteur de la pompe en tr/min.

9. Dispositif (10) selon l'une quelconque des revendications 3 à 8 précédentes, dans lequel l'écran (10c) répond aux signaux de commande d'affichage et affiche un écran de configuration de la boîte à outils de conception de la commande de pompe comprenant un ou plusieurs menus déroulants permettant à l'opérateur de la pompe de saisir ou de sélectionner des données de configuration, y compris au moins un point de commande pour définir les courbes de conception de la pompe, du système et de commande.

10. Procédé permettant d'assurer la commande d'une pompe à vitesse variable dans un système de pompage hydronique présentant des exigences de débit et de pression, comprenant les étapes consistant à
recevoir, dans un processeur de signaux ou un module de traitement de signaux (10a), des signaux contenant des informations concernant
- une courbe caractéristique instantanée du système (Sys) affichée sur un écran (10c) à l'intention de l'opérateur du système de pompage hydronique,
- une courbe caractéristique instantanée de la pompe affichée sur un écran (10c) à l'intention de l'opérateur du système de pompage hydronique,
- les exigences de débit et de pression du système affichées sur l'écran (10c) à l'intention de l'opérateur du système de pompage hydronique, et
- des ajustements en temps réel effectués par l'opérateur de la pompe sur au moins un paramètre de commande afin d'ajuster les performances du système de pompage hydronique ;
le procédé étant **caractérisé par** les étapes consistant à
déterminer, au sein du processeur de signaux ou du module de traitement des signaux (10a), des signaux correspondants contenant des informations relatives à la conception/ reconception d'une courbe de pompe (DPC), d'une courbe du système (DSC) et d'une courbe de régulation (CCC) afin d'ajuster les performances du système de pompage hydronique pour qu'elles correspondent à la courbe caractéristique du système (Sys), les exigences du système de débit et de pression, ainsi que les variations en temps réel du système de pompage hydronique, sur la base des signaux reçus.

11. Procédé selon la revendication 10, dans lequel le procédé comprend la configuration du processeur de signaux ou du module de traitement de signaux (10a) au sein d'une boîte à outils de conception de commande de pompe, ou en tant que partie intégrante de celle-ci, dotée de l'écran (10c), afin de fournir des fonctionnalités d'affichage liées à ladite boîte à outils de conception de commande de pompe.

12. Procédé selon la revendication 10 ou 11, dans lequel le procédé comprend :
la configuration du processeur de signaux ou du module de traitement (10a) pour fournir les signaux correspondants en tant que signaux de commande d'affichage ; et
l'écran (10c) réagissant aux signaux de commande d'affichage et fournissant des signaux d'affichage contenant des informations concernant :
au moins l'une parmi la courbe caractéristique du système et les exigences de débit et de pression du système de pompe hydronique ; et
un écran de configuration de la boîte à outils de conception de la commande de pompe affichant ledit au moins un paramètre de commande pour ajuster les performances du système de pompe hydronique.

13. Procédé selon l'une des revendications 10 à 12, dans lequel le procédé comprend :
l'utilisation d'un écran tactile comme écran (10c) que l'opérateur de la pompe peut toucher afin d'apporter des modifications en temps réel à ledit au moins un paramètre de commande pour ajuster les performances du système de pompe hydronique.

14. Procédé selon la revendication 12 ou 13, dans lequel le procédé comprend :
l'inclusion, en tant qu'au moins un paramètre de commande, d'un paramètre de « point de consigne » et d'un paramètre de « forme de courbe » de commande ; et
l'inclusion, en tant que modifications en temps réel effectuées par l'opérateur de la pompe, d'un ajustement soit du paramètre de « point de consigne », soit du paramètre de « forme de courbe » de commande, soit à la fois du paramètre de « point de consigne » et du paramètre de « forme de courbe » de commande, et/ou
l'inclusion, dans les signaux de commande d'affichage, d'informations concernant une courbe de système théorique et une courbe de pompe théorique ; et
l'affichage en temps réel de la courbe de système théorique et de la courbe de pompe théorique sur l'écran (10c) afin que l'opérateur de la pompe puisse les visualiser.

15. Procédé selon l'une des revendications précédentes 12 à 14, dans lequel le procédé comprend :
répondre, via l'écran (10c), aux signaux de commande d'affichage et fournir au moins une courbe de pompe, de système ou de commande, y compris une courbe de pompe instantanée, une courbe de système instantanée et une courbe de commande, et/ou
répondre, via l'écran (10c), aux signaux de commande d'affichage et fournir un ou plusieurs des éléments suivants :
la pression de la pompe en psi,
le débit de la pompe en gpm,
la puissance de la pompe en kW et
la vitesse de rotation n du moteur de la pompe en tr/min et/ou
répondre via l'écran (10c) aux signaux de commande d'affichage et fournir un écran de configuration de la boîte à outils de conception de commande de pompe qui comprend un ou plusieurs menus déroulants permettant à l'opérateur de la pompe de saisir ou de sélectionner des données de configuration, y compris au moins un point de commande pour définir les courbes de conception de la pompe, du système et de commande.
